# EUROPÄISCHE PATENTSCHRIFT

(11) **EP 0 596 296 B1**
(45) Veröffentlichungstag und Bekanntmachung des Hinweises auf die Patenterteilung: **19.12.2001**
(21) Anmeldenummer: 93116672.2
(22) Anmeldetag: 15.10.1993
(51) Int. Cl.: H04Q 11/04, H04M 3/50

(54) **Digitale Fernmeldevermittlungsanlage mit einer Anschlussmöglichkeit für einen oder mehrere externe Rechner**
Digital telecommunication exchange with connection possibility for one or more external computers
Central de télécommunication numérique avec possibilité de connexion d'un ou plusieurs calculateurs externes

(30) Priorität: 04.11.1992 DE 4237159
(43) Veröffentlichungstag der Anmeldung: 11.05.1994
(73) Patentinhaber: Tenovis GmbH & Co. KG, 60362 Frankfurt am Main (DE)
(72) Erfinder: Kretz, Hans-Joachim, Dipl.-Ing., D-65933 Frankfurt (DE); Wehrhahn, Klaus-Detlev, Dipl.-Ing., D-63179 Obertshausen (DE)
(74) Vertreter: Beck, Josef

(56) Entgegenhaltungen:
- EP-A- 0 392 141
- WO-A-94/00945
- NL-A- 9 100 423
- US-A- 5 210 789
- INTERNATIONAL SWITCHING SYMPOSIUM, Bd. 6, 28.Mai 1990 - 1.Juni 1990 STOCKHOLM (SW), Seiten 69-74, XP 000130965 K. TUCHNITZ 'Advanced telephony-computing applications and services - The new powerful dimension of ISDN PBXs'
- 6TH MEDITERRANEAN ELECTROTECHNICAL CONFERENCE, Bd. 1, 22. - 12.Mai 1991 LJUBLJANA (YU), Seiten 558-561, XP 000289513 C. SERRO ET AL 'Services Architecture in SEIS - A system for Intelligent Buildings'
- AT&T TECHNICAL JOURNAL, Bd. 70, Nr. 5, September 1991 - Oktober 1991 SHORT HILLS (US), Seiten 45-58, XP 000244603 C. FOARD ET AL 'Switch-to-Computer networking in the nineties: The evolution of AT&T's switch-computer interfaces'

## Beschreibung

Die Erfindung betrifft eine digitale Fernmeldevermittlungsanlage mit einer Vielzahl von Schnittstellen zum Anschluß von Endgeräten über Anschlußleitungen und zu anderen Vermittlungsanlagen führenden Verbindungsleitungen, wobei zumindest auf den Anschlußleitungen jeweils zwei Nutzkanäle für die Übermittlung von Nutzsignalinformationen und ein Signalisierungskanal für die Übermittlung von Signalisierungsinformationen zur Verfügung stehen und die Nutzsignalinformationen einem Koppelfeld zugeführt bzw. von diesem übernommen werden und eine oder mehrere besondere Schnittstellen mit einem Austausch der Protokolle in der Anwendungsebene der Schicht 7 nach CCITT X.217 zum Anschluß jeweils eines Rechners vorgesehen sind.

Eine derartige digitale Fernmeldevermittlungsanlage ist bereits bekannt. So wird in der DE-OS 37 43 956 ein digitales Kommunikationssystem beschrieben, bei welchem die Initiierung von Kommunikationsverbindungen durch eine daran angeschlossene externe Rechenanlage möglich ist. Durch die externe Rechenanlage sind Eingriffe in die Steuerungsvorgänge im Rahmen eines Verbindungsauf- bzw. -abbaus in dem digitalen Kommunikationssystem möglich, ohne daß hierzu besondere Vorkehrungen in der eigentlichen Steuereinrichtung des Kommunikationssystems notwendig sind. Durch eine entsprechende Programmierung der externen Rechenanlage läßt sich auf diese Weise ein digitales Kommunikationssystem an unterschiedliche Aufgaben leicht anpassen.

Inzwischen wurde auch durch die ECMA-Norm 179 und 180 unter dem Begriff CSTA (Computer Supported Telecommunications Applications) eine Schnittstelle definiert, die physikalisch mit dem Basis-Anschluss einer Anschlussleitung identisch sein kann und für den Anschluss eines externen Rechners genormt ist, wobei die Normung in erster Linie den Austausch der Protokolle in der Anwendungsebene der Schicht 7 nach CCITTX.217 betrifft.

Aus WO-A-94/00945 ist eine digitale Fernmeldevermittlungsanlage bekannt, bei der ein PC 410, ein Supervisor PC 67 oder ein PC 60 an eine besondere Schnittstelle an der Fernmeldevermittlungsanlage angeschlossen ist. Die besondere Schnittstelle ist als Interface Controller Card 64 oder Telefonie-Interface Cards 404, 406 bezeichnet. Es ist jedoch kein Hinweis gegeben, dass der PC 410, der Supervisor PC 67 oder der PC 60 die Funktionen eines Vermittlungsplatzes aufweisen.

EP-A-0 392 141 beschreibt eine digitale Fernmeldevermittlungsanlage mit einem Koppelfeld KF, das mit Leitungsschaltungen LS, Teilnehmeranschlussschaltungen TS und einer Platzsteuereinrichtung PS in Verbindung steht. An einer Teilnehmeranschlussschaltung TS ist entweder ein Fernsprechapparat T1 oder ein Rechner angeschlossen. Über die Platzsteuereinrichtung PS steht ein Vermittlungsplatz VP mit dem Koppelfeld KF in Verbindung. Somit ist der Vermittlungsplatz VP nicht direkt mit einer Schnittstelle des Koppelfeldes verbunden. Somit besteht der Nachteil, dass über die Platzsteuereinrichtung PS Fehler in den Datenstrom zwischen der Fernmeldevermittlungsanlage und dem Vermittlungsplatz VP eingebracht werden können, da eine Bearbeitung und/oder Umsetzung der Daten, die zum Vermittlungsplatz VP übertragen werden, erfolgt.

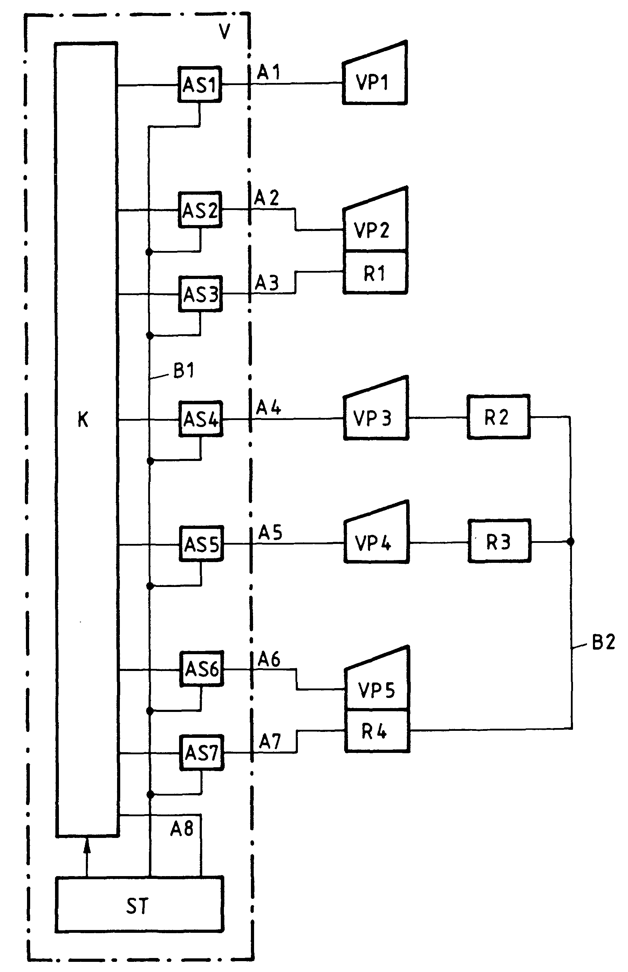

Aus International Switching Symposium, Band 6, 28. Mai 1990 bis 01. Juni 1990, Stockholm, Seiten 69 bis 74, K. Tuchniz, Advanced Telefony-Computing App. Center Serv. - "The new powerful dimension of ISDN PBXs" ist eine Anordnung mit einer digitalen Vermittlungsstation (ISDN PBX) bekannt, die über eine ISDN-Leitung mit einem Computer verbunden ist (Fig. 2a, 2b). Im Computer können Applikationsprogramme aufgearbeitet werden. Als Applikationsprogramme sind beispielsweise Hotel-Applikationen, automatische Anrufverteilung, Telemarketing und Tele-Management angegeben (Fig. 4). Im Computer läuft ein Softwareprogramm ab, das automatisch eine Umsetzung und Weiterleitung eines ankommenden Anrufs durchführt. Der Computer stellt jedoch keinen Vermittlungsplatz dar, über den Anrufe angenommen und nach Eingabe des gewünschten Teilnehmers mit dem gewünschten Teilnehmer verbunden werden.

Die Aufgabe der Erfindung besteht darin, eine digitale Fernmeldevermittlungsanlage der eingangs genannten Art mit besonderen Schnittstellen zum Anschluss eines oder mehrerer Rechner leistungsfähiger zu gestalten.

Diese Aufgabe wird dadurch gelöst, dass an einer bzw. mehreren besonderen Schnittstellen ein Vermittlungsplatz bzw. jeweils ein Vermittlungsplatz oder ein Rechner direkt angeschlossen sind.

Durch die Verwendung der besonderen Schnittstelle für den Anschluss eines externen Rechners zum Anschluss eines Vermittlungsplatzes lassen sich von diesem aus leicht Eingriffe in die Steuereinrichtung der Fernmeldevermittlungsanlage vornehmen, indem der gleiche Protokollaustausch verwendet wird. Damit sind besondere Eingriffe oder auch zusätzliche Programme, die im Rahmen des Betreibens von Vermittlungsplätzen in der Steuereinrichtung der Fernmeldevermittlungsanlage nötig werden, nicht notwendig.

Vorteilhafte Weiterbildungen der Erfindung ergeben sich aus den Unteransprüchen.

Die Erfindung wird anhand von Ausführungsbeispielen näher erläutert, welche in der Zeichnung dargestellt sind.

In der Zeichnung wird das Blockschaltbild einer digitalen Vermittlungsanlage gezeigt, an welcher mehrere Endgeräte angeschlossen sind. Bei diesen Endgeräten handelt es sich lediglich um Vermittlungsplätze und externe Rechner. Normale Endgeräte, wie beispielsweise digitale oder auch analoge Fernsprechapparate und auch zu anderen Vermittlungsstellen führende Verbindungsleitungen sind zwar bei einer derartigen Anlage ebenfalls vorhanden, werden jedoch in der Zeichnung nicht dargestellt, da diese nicht zum Verständnis der Erfindung benötigt werden.

An dem Koppelfeld K der digitalen Fernmeldevermittlungsanlage V sind Anschlußschaltungen AS angeschlossen, welche zum Anschluß von Anschlußleitungen dienen. Sämtliche Anschlußschaltungen AS sind über ein Bussystem B1 mit der das Koppelfeld K steuernden Steuereinrichtung ST der Fernmeldevermittlungsanlage V verbunden. Sämtliche gezeigte Anschlußschaltungen AS sind in ihrem Aufbau identisch, sie haben in erster Linie die Aufgabe, die Nutzkanäle von den Signalisierungskanälen auf der Anschlußleitung zu trennen bzw. diese zusammenzuführen. Auf der Anschlußleitung werden in beiden Richtungen zwei Nutzkanäle und ein Signalisierungskanal übertragen. Die Nutzkanäle dienen zur Übermittlung von Sprachsignalen oder auch Daten (Faximileinformationen, Teletext- oder Fernschreibzeichen, usw.), während der Signalisierungskanal zur Übermittlung vermittlungstechnischer Informationen dient, die in erster Linie zum Verbindungsauf- und -abbau benötigt werden. Die Nutzkanäle werden über das Koppelfeld K der gewünschten Anschlußschaltung AS zugeführt, während die von der Anschlußleitung eintreffenden Informationen der Signalisierungskanäle über das Bussystem B1 der Steuereinrichtung ST zugeführt werden, welche daraufhin entsprechende Verbindungen innerhalb des Koppelfeldes K durchschaltet. In umgekehrter Richtung werden Informationen für die Signalisierungskanäle von der Steuereinrichtung ST über das Bussystem B1 zu den Anschlußleitungen AS übertragen, welche für die Endgeräte bestimmt sind. Zu den Signalsierungsinformationen, die von einem Endgerät auf dem beschrieben Weg zur Steuereinrichtung ST gelangen, gehören beispielsweise die Aushängemeldung und die Rufnummer des gewünschten Teilnehmers, zu den Signalisierungsinformationen die von der Steuereinrichtung ST zum Endgerät übermittelt werden, fällt beispielsweise die Auslösung des Rufsignals bei dem gewünschten Teilnehmer.

Wie bereits erwähnt, sind die Anschlußschaltungen AS in ihrem physikalischen Aufbau untereinander gleich, die Behandlung der Signalisierungsinformationen, die zwischen den Anschlußschaltungen AS und der Steuereinrichtung ST ausgetauscht werden, ist jedoch unterschiedlich. Bei den Anschlüssen A2, A4, A5 und A6 handelt es sich um Anschlüsse zum Anschluß von normalen Endgeräten, wie beispielsweise digitale Fernsprechapparate. Bei den Anschlüssen A1, A3 und A7 handelt es sich um sogenannte CSTA-Anschlüsse, deren Signalisierungsinformationen auf andere Weise behandelt werden als diejenigen der vorgenannten Anschlüsse, dabei können sämtliche Anschlüsse A1 bis A7 als sogenannte Sₒ oder auch als UPₒ₋ Schnittstellen ausgebildet sein.

Durch die CSTA-Schnittstelle ist der direkte Eingriff in die Abläufe der Steuereinrichtung ST möglich. Weiterhin lassen sich über diese Schnittstelle auf einfache Weise Informationen aus der Steuereinrichtung ST abrufen. Im Grunde genommen bildet die CSTA-Schnittstelle den Zugang zu entsprechenden Programmen in der Steuereinrichtung ST, durch welche die genannten Eingriffe in die Steuereinrichtung ST möglich sind.

Der Schlüssel zur Benutzung der CSTA-Schnittstelle liegt in der Verwendung der sogenannten Schicht 7 des CCITT/CEPT-Schichtenmodells, welches beispielsweise in der Druckschrift TN-Nachrichten 1984, Heft 86, auf den Seiten 3 bis 9 beschrieben ist. Über die Schicht 7 ist der Zugriff zu den Anwendungsprotokollen möglich, damit können Absprachen über die Bedeutung der Nachrichten getroffen werden.

So ist es beispielsweise über die besondere Schnittstelle möglich, die Steuereinrichtung ST zu veranlassen, einen Verbindungsaufbau zwischen zwei Teilnehmern vorzunehmen, hierzu sind der Steuereinrichtung ST lediglich Angaben über den (rufenden) und den (gerufenen) Teilnehmer zu übermitteln und Angaben über die Art der Verbindung (Sprache, Daten, usw.). Aufgrund entsprechender Befehle aus der Steuereinrichtung ST wird nun eine entsprechende Verbindung zu Übertragung der Nutzkanäle zwischen den beiden Teilnehmern innerhalb des Koppelfeldes K vorbereitet und, wenn es sich um eine Sprachverbindung handelt, der Weckerruf bei beiden Endgeräten veranlaßt, wenn die betreffenden Anschlüsse frei sind. Im Besetztzustand eines der beiden Anschlüsse kann die Verbindung erst nach Freiwerden des betreffenden Anschlusses durchgeführt werden oder auch der Fernsprechapparat des besetzten Anschlusses durch eine entsprechende Meldung über das Vorliegen eines Anrufs aus der Steuereinrichtung ST aufmerksam gemacht werden.

Ebenso wie der Verbindungsaufbau ist auch ein von außen gesteuerter Verbindungsabbau möglich. Die beschriebenen Vorgänge sind im Grunde genommen die gleichen wie bei einem normalen Verbindungsaufbau, der vom rufenden Teilnehmeranschluß veranlaßt wird, der Unterschied besteht nur darin, daß der Verbindungsaufbau nicht vom rufenden Teilnehmer sondern von einem externen Rechner veranlaßt wird, welcher an der besonderen Schnittstelle angeschlossen ist.

Eine weitere Möglichkeit bietet die besondere Schnittstelle zur Überwachung des Verkehrs. Es ist jederzeit möglich, den aktuellen Zustand von Einrichtungen, Endgeräten oder auch Verbindungen abzufragen. Ebenso besteht die Möglichkeit, Einrichtungen, Endgeräte oder auch Verbindungen über einen gewissen Zeitraum hinweg zu überwachen. Dabei ist einzugeben, welche Einrichtungen, Endgeräte oder Verbindungen zu überwachen sind, wann die Überwachung zu beginnen hat und wann diese zu beenden ist.

Bei dem Vermittlungsplatz VP1, der wie bereits erwähnt, an einer besonderen Schnittstelle A1 angeschlossen ist, handelt es sich um einen normalen digitalen Fernsprechapparat, der als Vermittlungsplatz eingesetzt ist. Reicht die Anzeigevorrichtung des digitalen Fernsprechapparates nicht für die Vermittlungsaufgabe aus, so ist es denkbar, als Zusatzeinrichtung eine zusätzliche Anzeigevorrichtung beispielsweise in Form eines Bildschirms anzuschließen. Eine andere Möglichkeit besteht darin, einen sogenannten Personal-Computer (PC) einzusetzen, welcher entweder am digitalen Fernsprechapparat angeschlossen oder welcher mit zwei ISDN-Schnittstellen verbunden ist, wobei im letzteren Fall die eigentliche Rechnerschnittstelle des Rechners R1 mit der besonderen Schnittstelle A3 und die Schnittstelle einer ISDN-Zusatzkarte mit einer normalen Schnittstelle A2 verbunden ist. Die Zusatzkarte des PC enthält dabei die notwendigen Einrichtungen zur Abwicklung eines Fernsprechverkehrs (Digital(Digital/Analogwandler, Analog/Digitalwandler, Ruforgan, Anschluß für einen Handapparat oder eine Hörgarnitur). Die Steuerung der Vorgänge im Rahmen eines Vermittlungsplatzes erfolgt über die Eingabetastatur des PC, während als Anzeigevorrichtung der Bildschirm desselben verwendet wird. Der Vermittlungsplatz VP2 ist in den Rechner R1 integriert. Dabei ist es auch denkbar, den Rechner mit einer entsprechenden ISDN-Zusatzkarte zu versehen und diesen an der besonderen Schnittstelle anzuschließen, wobei über diese auch die Sprechverbindungen über die besondere Schnittstelle abgewickelt werden.

Die Vermittlungsplätze VP3, VP4 und VP5 sind mit normalen Anschlüssen A4 bzw. A5 bzw. A6 verbunden. Bei den Vermittlungsplätzen VP3 und VP4 kann es sich um normale digitale Fernsprechendgeräte handeln, an denen als Zusatzeinrichtung ein Rechner R2 bzw. R3 angeschlossen ist. Dabei sind keine Zusatzeinrichtungen in den Rechnern R2 und R3 notwendig, wie dies bei dem Rechner R1 der Fall ist. Als Anzeigevorrichtung dient der Bildschirm der Rechner, während die Eingabetastatur der Rechner für die Durchführung der Vermittlungsvorgänge herangezogen werden kann. Der digitale Fernsprechapparat wird lediglich als Sprachschnittstelle verwendet, weshalb dieser als digitaler Einfachapparat ausgebildet sein kann.

Es ist jedoch auch denkbar, die Vermittlungsplätze VP3 und VP4 in die Rechner R2 bzw. R3 zu integrieren, wie dies bei der Kombination VP2/R1 bzw. VP5/R4 der Fall ist. Die Rechner R2, R3 und R4 sind über ein gemeinsames Bussystem B2 miteinander verbunden, wobei der Rechner R4 als übergeordneter Rechner die Aufgabe hat, beispielsweise die ankommenden Anrufe auf die einzelnen Vermittlungsplätze VP3 und VP4 zu verteilen. Das Bussystem B2 kann beispielsweise als sogenanntes LAN(local area network) ausgebildet sein, so daß die entsprechenden Schnittstellen für den Anschluß des Bussystems B2 an den Rechnern R2, R3 und R4 handelsüblich sind. Bei dem gezeigten Beispiel wird davon ausgegangen, daß in die Anrufverteilung drei Vermittlungsplätze VP3 bis VP5 einbezogen sind. Selbstverständlich können auch weitere Vermittlungsplätze VP und Rechner R in die Anrufverteilung einbezogen sein, wobei die Rechner ebenfalls an dem Bussystem B2 angeschlossen sind. Als übergeordneter Rechner R zur Anrufverteilung kann auch ein separater Rechner ohne integrierten Vermittlungsplatz an dem Bussystem B2 angeschlossen sein, welcher mit einer besonderen Schnittstelle verbunden ist.

Für den Informationsaustausch zwischen der Steuereinrichtung ST und einem Rechner R wird in erster Linie der Signalisierungskanal benutzt. Für die Übertragung größerer Datenmengen, beispielsweise von Informationen für ein "Telefonbuch" zur Darstellung auf dem Bildschirm können auch die beiden Nutzkanäle herangezogen werden. Zu diesem Zweck ist der Anschluß A8 am Koppelfeld K mit der Steuereinrichtung ST verbunden, so daß die Nutzkanalinformationen zwischen der Steuereinrichtung ST und einem Rechner R über den Nutzkanal, d.h. über das Koppelfeld K ausgetauscht werden können.

Bei einem Mehrplatzkonzept mit einem übergeordneten Rechner R kann dieser die Anrufverteilung, die Anrufverwaltung, Informationen über die An-/Abschaltung von Plätzen, die Besetztanzeige bearbeiten und darüber hinaus auch die Informationen für ein gemeinsames elektronisches "Telefonbuch" enthalten. Die Verwendung des übergeordneten Rechners R ermöglicht die flexible Anschaltung von Vermittlungsplätzen an die digitale Fernmeldevermittlungsanlage, ohne daß hierzu eine besondere Platzsteuereinrichtung benötigt wird, wie dies bisher der Fall war.

Wie bereits erwähnt, ermöglicht die besondere Schnittstelle die Veranlassung eines Verbindungsaufbaus zwischen zwei Teilnehmern bzw. zwischen einer Verbindungsleitung und einem Teilnehmer, ohne daß hierzu besondere Eingriffe in die Steuereinrichtung ST notwendig sind. Durch entsprechende Programmierung sind nur die Vermittlungsplätze bzw. die Rechner R in der Lage, Protokolle nach der Schicht 7 mit der Steuereinrichtung ST auszutauschen. Vom Vermittlungsplatz VP1 bzw. von den Eingabetastaturen der Rechner R1, R2, R3 und evtl. R4 ist also der Verbindungsaufbau bzw. Verbindungsabbau zwischen zwei Teilnehmern bzw. zwischen einer Verbindungsleitung und einem Teilnehmer möglich. Weiterhin können die genannten Einrichtungen derart programmiert sein, daß bei Eingabe der Rufnummer eines gewünschten Teilnehmers bei einem ankommenden Amtsanruf in der Steuereinrichtung ST der Belegungszustand dieses Teilnehmeranschlusses abgefragt und an dem betreffenden Rechner bzw. Vermittlungsplatz zur Anzeige übermittelt wird. Ebenso ist es möglich, sämtliche Teilnehmeranschlüsse bzw. eine bestimmte Gruppe von Teilnehmeranschlüssen hinsichtlich der Betriebszustände ständig in der Steuereinrichtung ST abzufragen, wobei die Informationen zur Steuerung eines Besetztlampenfeldes bzw. einer entsprechenden Anzeige auf dem Vermittlungsplatz bzw. auf dem Bildschirm des betreffenden Rechners R dienen.

Der übergeordnete Rechner, der an dem Bussystem B2 angeschlossen ist, kann auch die Anrufverteilung nach Anrufarten durchführen, die abzuwickelnden Anrufe können in Wartefeldern für die einzelnen Vermittlungsplätze VP verwaltet werden. Außerdem ist die Übergabe von Gesprächen von einem Vermittlungsplatz zu einem anderen Vermittlungsplatz denkbar.

Auf die Art der Übertragungsverfahren, die im Rahmen der besonderen Schnittstelle zum Einsatz kommen können, wird im Rahmen dieser Beschreibung nicht weiter eingegangen, ebensowenig wird auf eine weitergehende Beschreibung CSTA-Schnittstelle eingegangen. Auf nähere Einzelheiten wird auf die ECMA-Norm 179 und 180 verwiesen, die in gedruckter Form vorliegt.

## Patentansprüche

1. Digitale Fernmeldevermittlungsanlage mit einer Vielzahl von Schnittstellen zum Anschluss von Endgeräten über Anschlussleitungen und zu anderen Vermittlungsanlagen führenden Verbindungsleitungen, wobei zumindest auf den Anschlussleitungen jeweils zwei Nutzkanäle für die Übermittlung von Nutzsignalinformationen und ein Signalisierungskanal für die Übermittlung von Signalisierungsinformationen zur Verfügung stehen und die Nutzsignalinformationen einem Koppelfeld zugeführt bzw. von diesem übernommen werden und eine oder mehrere besondere Schnittstellen mit einem Austausch der Protokolle in der Anwendungsebene der Schicht 7 nach CCITT X.217 zum Anschluss jeweils eines Rechners vorgesehen sind,
**dadurch gekennzeichnet,**
**dass** an einer bzw. mehreren besonderen Schnittstellen (A1) direkt ein Vermittlungsplatz (VP1) bzw. jeweils direkt ein Vermittlungsplatz (VP) angeschlossen ist, oder
**dass** ein Rechner R am Vermittlungsplatz (VP) angeschlossen ist und dass der Rechner R direkt an einer besonderen Schnittstelle (A3) angeschlossen ist.

2. Digitale Fernmeldevermittlungsanlage nach Anspruch 1,
**dadurch gekennzeichnet,**
**dass** Vermittlungsplatz (VP2) und Rechner (R1) eine funktionale Einheit bilden, wobei der Vermittlungsplatz (VP2) an einer normalen und der Rechner (R1) an einer besonderen Schnittstelle angeschlossen sind.

3. Digitale Fernmeldevermittlungsanlage nach einem der Ansprüche 1 oder 2,
**dadurch gekennzeichnet,**
**dass** mehrere Vermittlungsplätze (VP) und Rechner (R) vorhanden sind und dass die Rechner (R) über ein gemeinsames Bussystem (B2) miteinander verbunden sind.

4. Digitale Fernmeldevermittlungsanlage nach Anspruch 3,
**dadurch gekennzeichnet,**
**dass** ein Rechner (R) als übergeordneter Rechner arbeitet.

5. Digitale Fernmeldevermittlungsanlage nach einem der Ansprüche 1 bis 4,
**dadurch gekennzeichnet,**
**dass** die Rechner (R) als sogenannte Personal-Computer ausgebildet sind.

6. Digitale Fernmeldevermittlungsanlage nach einem der Ansprüche 1 bis 5,
**dadurch gekennzeichnet,**
**dass** die Steuereinrichtung (ST) der Fernmeldevermittlungsanlage Zugang zu den Nutzkanälen des Koppelfeldes (K) hat.

7. Digitale Fernmeldevermittlungsanlage nach einem der Ansprüche 1 bis 6,
**dadurch gekennzeichnet,**
**dass** der Rechner als Vermittlungsplatz ausgestattet ist und über die besondere Schnittstelle (A1) angeschlossen ist, wobei die Übermittlung der Sprachsignale ebenfalls über die Schnittstelle erfolgt.

## Claims

1. Digital telecommunication handling installation having a plurality of interfaces for connection of end devices via connection lines and connection lines leading to other handling installations, wherein at least on the connection lines in each case two basic channels for the transfer of useful signal information and a signalling channel for the transfer of signalling information are available and the useful signal information is supplied to a switching unit or imported therefrom and one or a plurality of special interfaces are provided with an exchange of the protocols in the application level of layer 7 according to CCITT X.217 for connection of a respective computer,
**characterised in that**
one or a plurality of special interfaces (A1) has an operating console (VP1) or a respective operating console (VP) directly connected to it or
a computer R is connected to the operating console (VP) and that the computer R is directly connected to a special interface (A3).

2. Digital telecommunication handling installation according to claim 1 **characterised in that** the operating console (VP2) and the computer (R1) form a functional unit, wherein the operating console (VP2) is connected to a standard interface and the computer (R1) is connected to a special interface.

3. Digital telecommunication handling installation according to any one of claims 1 or 2 **characterised in that** a plurality of operating consoles (VP) and computers (R) are provided and that the computers (R) are connected to each other via a common bus system (B2).

4. Digital telecommunication handling installation according to claim 3, **characterised in that** one computer (R) operates as a superordinated computer.

5. Digital telecommunication handling installation according to any one of claims 1 to 4 **characterised in that** the computers (R) are formed as so-called personal-computers.

6. Digital telecommunication handling installation according to any one of claims 1 to 5 **characterised in that** the control device (ST) of the telecommunication handling installation has access to the basic channels of the switching unit (K).

7. Digital telecommunication handling installation according to any one of claims 1 to 6 **characterised in that** the computer is arranged as an operating console and is connected via the special interface (A1), wherein the transfer of the voice signals also takes place via the interface.

## Revendications

1. Installation de télétransmission numérique comprenant plusieurs interfaces pour brancher des terminaux sur des lignes de branchement et des lignes de liaison aboutissant à d'autres installations de transmission,
les lignes de branchement constituant chaque fois au moins deux canaux utiles pour la transmission d'informations utiles et un canal de signalisation pour la transmission d'informations de signalisation, et
des informations utiles étant appliquées à un champ de couplage ou reprises par celui-ci et une ou plusieurs interfaces particulières avec un échange de protocoles dans le plan d'application de la couche (7) selon la norme CCITT X.217 pour brancher un quelconque calculateur,
**caractérisée en ce qu'**
un emplacement de transmission (VP1) ou un emplacement de transmission (VP) est relié directement à une ou plusieurs interfaces particulières (A1) ou,
le calculateur (R) est relié à l'emplacement de transmission (VP), et le calculateur (R) est raccordé directement à une interface particulière (A3).

2. Installation de télétransmission numérique selon la revendication 1,
**caractérisée en ce que**
l'emplacement de transmission (VP2) et le calculateur (R1) constituent une unité fonctionnelle, et
l'emplacement de transmission (VP2) est relié à une interface normale et le calculateur (R1) à une interface particulière.

3. Installation de télétransmission numérique selon l'une quelconque des revendications 1 ou 2,
**caractérisée par**
plusieurs emplacements de transmission (VP) et calculateurs (R) et les calculateurs (R) sont reliés par un système de bus commun (B2).

4. Installation de télétransmission numérique selon la revendication 3,
**caractérisée en ce qu'**
un calculateur (R) fonctionne comme calculateur principal.

5. Installation de télétransmission numérique selon l'une quelconque des revendications 1 à 4,
**caractérisée en ce que**
les calculateurs sont des ordinateurs personnels.

6. Installation de télétransmission numérique selon l'une quelconque des revendications 1 à 5,
**caractérisée en ce que**
l'installation de commande (ST) de l'installation de télétransmission accède aux canaux utiles du champ de couplage (K).

7. Installation de télétransmission numérique selon l'une quelconque des revendications 1 à 6,
**caractérisée en ce que**
le calculateur équipé comme emplacement de transmission est relié par l'interface particulière (A1), la transmission des signaux vocaux se faisant également par l'interface.
